# EUROPÄISCHE PATENTANMELDUNG

(11) **EP 1 640 871 A2**
(43) Veröffentlichungstag der Anmeldung: **29.03.2006**
(21) Anmeldenummer: 05106501.9
(22) Anmeldetag: 14.07.2005
(51) Int. Cl.: G06F 11/34

(54) **Verfahren und Vorrichtung zum Bestimmen einer Systemlast eines Prozessorsystems**

(30) Priorität: 28.09.2004 DE 102004046878
(71) Anmelder: ROBERT BOSCH GMBH, 70442 Stuttgart (DE)
(72) Erfinder: Brunner, Michael, 74564 Crailsheim (DE); Scheele, Oliver, 71696 Moeglingen (DE)

(57) **Zusammenfassung**

Die vorliegende Erfindung betrifft ein Verfahren und eine Vorrichtung zum Bestimmen der Systemlast eines Prozessorsystems 1. Das Prozessorsystem 1 übermittelt über eine Schnittstelle einen Prozesszustand, wobei ein aktiver Prozesszustand angibt, dass ein aktiver Prozess ausgeführt wird. Der aktive Prozesszustand wird an eine Protokolleinrichtung 3 übermittelt. Die Protokolleinrichtung 3 zeichnet eine erste Zeitspanne auf, dabei entspricht eine erste Zeitspanne einer Zeitspanne, für welche ein aktiver Prozesszustand vorliegt. Die Protokolleinrichtung 3 bestimmt eine Systemlast, welche innerhalb eines Beobachtungszeitraums vorliegt, indem die ersten Zeitspannen, welche innerhalb dieses Beobachtungszeitraumes aufgezeichnet wurden, in Relation zu der Dauer des Beobachtungszeitraums gesetzt werden.

## Beschreibung

### STAND DER TECHNIK

Die vorliegende Erfindung betrifft ein Verfahren und eine Vorrichtung zum Bestimmen einer Systemlast eines Prozessorsystems.

Obwohl die vorliegende Erfindung mit Bezug auf ein Verfahren und eine Vorrichtung zum Bestimmen einer Systemlast eines Steuersystems in einem Fahrzeug beschrieben wird, ist die Erfindung darauf nicht beschränkt.

In Fahrzeugen werden elektronische Steuervorrichtungen implementiert, welche ein Prozessorsystem aufweisen, um mit diesem Prozessorsystem eine Software auszuführen. Während der Entwicklung der Steuervorrichtung sowie der Software ist es zweckmäßig die Systemlast des Prozessorsystems beim Ausführen der Software zu bestimmen.

Die Patentschrift DE 197 57 876 C2 offenbart ein Verfahren zum Bestimmen der Systemlast während des Ausführens einer Software auf dem Prozessorsystem. Dazu wird durch die Software ein Leerlaufprogramm ausgerufen, wenn keine funktionalen Prozesse ausgeführt werden müssen. Das Leerlaufprogramm inkrementiert jedes Mal einen internen Zähler, wenn das Leerlaufprogramm durch die Software aufgerufen wird. Nach Überschreiten einer Beobachtungszeitspanne bestimmt das Leerlaufprogramm die Systemlast, indem es den internen Zähler in Relation zu der Beobachtungszeitspanne setzt. Nachteiligerweise belastet das Leerlaufprogramm das Prozessorsystem durch das Erhöhen des internen Zählers und das Bestimmen der Systemlast. Außerdem ist es mit diesem Verfahren nicht möglich, den Beitrag eines einzelnen Prozesses einer Software zu der Systemlast zu bestimmen.

Die Betriebssystemspezifikation von OSEK (offene Systeme und deren Schnittstellen für die Elektronik im Kraftfahrzeug) schreibt nicht vor, dass in der Software eines Steuergeräts die Ausführung eines Leerlaufprogramms möglich sein muss bzw. eine solche Routine vorzusehen ist. Daher ist es zu vermeiden, die Systemlast basierend auf solchen Leerlaufprogrammen zu bestimmen, um kompatibel zu bestehenden und zukünftigen Systemen zu sein.

Ein weiteres Verfahren nützt spezielle Werkzeuge von Fehlersuchprogrammen (Debugger) für Software-Pakete, welche die Ausführung und Dauer der Ausführung eines einzelnen Prozesses graphisch darstellen können. Aus der graphischen Darstellung lässt sich per Hand die Systemlast bestimmen, jedoch ist dieses Verfahren sehr aufwendig und fehleranfällig.

### VORTEILE DER ERFINDUNG

Aufgabe der Erfindung ist eine Vorrichtung und ein Verfahren bereitzustellen, mit welchen die Systemlast eines Prozessorsystems, verursacht durch einen oder mehrere Prozesse, welche auf dem Prozessorsystem ausgeführt werden, bestimmt werden kann und die vorgenannten Probleme vermieden werden.

Die Aufgabe wird durch die vorliegende Erfindung nach dem Verfahren bzw. mit der Vorrichtung mit den Merkmalen der Patentansprüche 1 bzw. 10 gelöst.

Eine der vorliegenden Erfindung zugrunde liegende Idee besteht darin, dass ein Prozessorsystem, auf welchem ein oder mehrere aktive Prozesse ausgeführt werden, einen Prozesszustand an eine Schnittstelle übermittelt. Ein aktiver Prozesszustand gibt an, dass ein aktiver Prozess ausgeführt wird. Der aktive Prozesszustand wird an eine Protokolleinrichtung übermittelt. Die Protokolleinrichtung zeichnet eine erste Zeitspanne auf, dabei entspricht eine erste Zeitspanne einer Zeitspanne, für welche der aktiver Prozesszustand vorliegt. Die Protokolleinrichtung bestimmt eine Systemlast, welche innerhalb eines Beobachtungszeitraums vorliegt, indem die ersten Zeitspannen, welche innerhalb dieses Beobachtungszeitraumes aufgezeichnet wurden, in Relation zu der Dauer des Beobachtungszeitraums gesetzt werden. Dieses Verfahren belastet vorteilhafter Weise in sehr geringer Weise das Prozessorsystem, da dieses nur noch den Prozesszustand ausgeben muss.

Eine Vorrichtung zum Bestimmen der Systemlast mittels des erfmdungsgemäßen Verfahrens weist die Protokolleinrichtung mit einer Speichereinrichtung auf, um die ersten Zeitspannen abzuspeichern, sowie eine Prozessoreinrichtung, um die Systemlast basierend auf den ersten Zeitspannen zu bestimmen. Auf diese Weise werden keine zusätzlichen Ressourcen, wie Speicherplatz oder ein Prozessor des Prozessorsystems zum Bestimmen der Systemlast benötigt.

In den Unteransprüchen finden sich vorteilhafte Weiterbildungen und Verbesserungen des im Patentanspruch 1 angegebenen Verfahrens sowie der im Patentanspruch 8 angegebenen Vorrichtung zum Bestimmen einer Systemlast eines Prozessorsystems.

Gemäß einer bevorzugten Weiterbildung werden in einem Schritt aktive Prozesse ausgewählt und nur für die ausgewählten aktiven Prozesse gibt das Prozessorsystem einen aktiven Prozesszustand an die Schnittstelle aus, wenn ein solcher ausgewählter aktiver Prozess durch das Prozessorsystem ausgeführt wird. Durch das Auswählen eines aktiven Prozesses oder mehrerer aktiver Prozesse wird es ermöglicht, deren individuellen Beitrag zu der gesamten Systemlast zu bestimmen.

Gemäß einer weiteren Weiterbildung des Verfahrens werden die ersten Zeitspannen eines Beobachtungszeitraums zum Bestimmen der Systemlast aufsummiert.

Gemäß einer weiteren bevorzugten Weiterbildung werden in einem Schritt aktive Prozesse ausgewählt und zum Bestimmen der Systemlast werden nur die ersten Zeitspannen eines Beobachtungszeitraums aufsummiert, welche einem der ausgewählten Prozesse zugehörig sind. Dies ermöglicht den individuellen Beitrag von einem oder mehreren Prozessen zu der gesamten Systemlast zu bestimmen, wobei keine Änderung an einer Software vorgenommen werden muss, welche auf dem Prozessorsystem ausgeführt wird.

Gemäß einer weiteren Weiterbildung wird der Prozesszustand durch eine binäre Informationseinheit kodiert. Dies ermöglicht einen minimalen Ressourcenaufwand für das Prozessorsystem wie auch die Schnittstelle.

Gemäß einer weiteren bevorzugten Ausbildung weist der Prozessorzustand eine eindeutige Kennung des zugehörigen aktiven Prozesses auf, wobei die eindeutige Kennung mit der ersten Zeitspanne aufgezeichnet wird. Dies vereinfacht die Zuordnung der ersten Zeitspannen zu den aktiven Prozessen für eine nachfolgende Analyse der Systemlast.

Gemäß einer weiteren Weiterbildung sind für parallel ausgeführte aktive Prozesse jeweils eine eigene Schnittstelle vorgesehen.

Gemäß einer weiteren Weiterbildung weist die Protokolleinrichtung einen eigenen Zeitgeber auf.

Gemäß einer weiteren Weiterbildung weist die Vorrichtung eine Ausgabeeinrichtung zur Darstellung der Systemlast in graphischer und/oder textbasierter Darstellung auf.

Gemäß einer weiteren Weiterbildung weist die Vorrichtung eine Kommunikationseinrichtung zum Übermitteln des Prozesszustandes an die Protokolleinrichtung auf.

### ZEICHNUNGEN

Ausführungsbeispiele der Erfindung sowie vorteilhafte Weiterbildungen sind in den Figuren der Zeichnung dargestellt und in der nachfolgenden Beschreibung näher erläutert.

In den Figuren zeigen:
- FIG. 1: eine schematische Darstellung einer Ausführungsform der vorliegenden Erfindung;
- FIG. 2: eine schematische Darstellung einer Prozesssequenz und einer zugehörigen Prozesszustandssequenz einer Ausführungsform; und
- FIG. 3: eine schematische Darstellung einer Prozesszustandssequenz; einer Auswahlsequenz und einer zugehörigen Prozesszustandssequenz einer Ausführungsform.

### BESCHREIBUNG DER AUSFÜHRUNGSBEISPIELE

In den Figuren bezeichnen gleiche Beobachtungszeichen gleiche oder funktionsgleiche Komponenten.

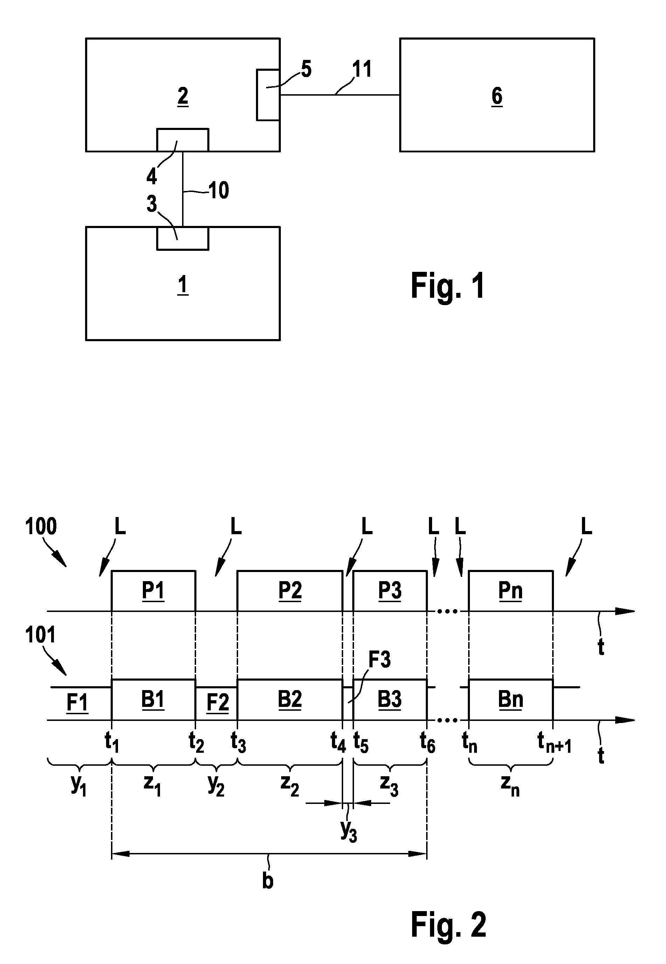

In FIG. 1 ist eine Ausführungsform der vorliegenden Erfindung dargestellt. Ein Prozessorsystem 1 weist einen oder mehrere Prozessoren auf. Das Prozessorsystem 1 wird benutzt, um eine Software auszuführen, welche z.B. den Betrieb eines Fahrzeugs steuert. Die Software weist einzelne aktive Prozessen auf, welche für die einzelnen Funktionen des Steuersystems notwendig sind. Diese aktiven Prozesse können zeitlich aufeinanderfolgend oder parallel ausgeführt werden. Zwischen einzelnen aktiven Prozessen kann das Prozessorsystem 1 Leerlaufprozesse oder Warteschleifen ausführen. Die Leerlaufprozesse oder Warteschleifen weisen keine Funktionalität auf. Dies ist insbesondere bei Echtzeitsystemen der Fall, welche die aktiven Prozesse zu vorgebenen Zeitpunkten starten.

In der Ausführungsform der vorliegenden Erfmdung wird beim Starten eines aktiven Prozesses durch das Prozessorsystem 1 ein aktiver Prozesszustand über eine Schnittstelle 3 ausgegeben. Beim Beenden eines aktiven Prozesses wird die Ausgabe des aktiven Prozesszustandes durch die Schnittstelle 3 beendet. Der Prozesszustand kann als binäre Informationseinheit, z.B. als Bit, als 0-wertiger bzw. 1-wertiger Pegel an einem Anschlusspin, kodiert sein. So kann das Prozessorsystem einer Protokolleinrichtung 2 mit einem sehr geringen Ressourcenaufwand übermittteln, ob momentan ein aktiver Prozess in dem Prozessorsystem 1 ausgeführt wird oder nicht.

Die Übermittlung des Prozesszustandes von der Schnittstelle 3 an die Protokolleinrichtung 2 erfolgt über eine Kommunikationseinrichtung 10 und eine Schnittstelle 4 der Protokolleinrichtung 2. Die Protokolleinrichtung registriert den Prozesszustand. Liegt ein aktiver Prozesszustand vor, zeichnet die Protokolleinrichtung eine erste Zeitspanne auf, welche angibt, wie lange der aktive Prozesszustand andauert. Hierzu können z.B. der Anfang und das Ende des aktiven Prozesszustandes, der Anfang des aktiven Prozesszustandes und die Dauer des aktiven Prozesszustandes oder einfach nur die Dauer des aktiven Prozesszustandes als erste Zeitspanne abgespeichert werden. Zum Speichern weist die Protokolleinrichtung 2 eine Speichereinrichtung mit flüchtigem und/oder nicht flüchtigem Speicher auf.

Aus den aufgezeichneten Zeitspannen lässt sich die Systemlast des Prozessorsystems 1 bestimmen. Dazu werden die ersten Zeitspannen aufsummiert, welche innerhalb eines vorbestimmten Beobachtungszeitraumes aufgezeichnet wurden. Ein übliches Maß für die Systemlast ist, diese Summe ins Verhältnis zu der Dauer des Beobachtungszeitraumes zu setzen. Hierbei gibt ein Verhältnis von 1 eine vollständige Auslastung des Prozessorsystems an. Um ein Prozessorsystem über einen längeren Zeitraum zu beobachten, ist es sinnvoll, den Zeitraum in mehrere Beobachtungszeiträume mit kürzerer Dauer zu unterteilen. Die Länge eines einzelnen Beobachtungszeitraums muss kurz genug sein, um einzelne Spitzenlasten des Prozessorsystems 1 erfassen zu können.

Über eine Ausgabeschnittstelle 5 und eine Kommunikationseinrichtung 11 werden die erfassten Zeitspannen und/oder Systemlasten an eine Ausgabeeinrichtung 6 übermittelt. Diese Ausgabeeinrichtung 6 ermöglicht eine graphische Darstellung z.B. in Form eines Plotters und/oder einer textbasierten Darstellung, z.B. einem Listenausdruck. Die Ausgabeeinrichtung 6 kann ebenso ein Rechnersystem sein, welches eine weitere Analyse der Zeitspannen und/oder der Systemlasten ermöglicht.

Die Protokolleinrichtung 2 weist eine Prozessoreinrichtung auf, welche die Bestimmung der Systemlast ermöglicht. Da die Bestimmung der Systemlast in der Protokolleinrichtung 2 erfolgt, und nicht in dem Prozessorsystem 1, ist durch diese Ausführungsform der vorliegenden Erfindung eine Entlastung des Prozessorsystems 1 erreicht. Vorteilhafterweise verhält sich somit das Prozessorsystem 1 bei der Analyse der Systemlast nahezu wie ein Prozessorsystem 1, dessen Systemlast nicht analysiert wird. Damit kann das Verfahren zum Bestimmen der Systemlast auch verwendet werden, um einen täglichen Betrieb eines Prozessorsystems zu überwachen. Hierbei wird insbesondere daran gedacht, ein Steuersystem eines Fahrzeuges während einer Fahrt zu überwachen, da während der Fahrt Spitzenbelastungen auftreten könnten, welche im Labor möglicherweise verborgen bleiben würden.

Ein Vergleich der Auslastung verschiedener Prozessorsystemen und/oder Softwareversionen wird durch Verwenden von jeweils der selben Protokolleinrichtung 2 ermöglicht. Eine Anpassung der Berechnung der Systemlast, kann zentral in der Protolleinrichtung 2 erfolgen. Eine aufwendige Änderung der verschiedenen Prozessorsysteme und/oder der Softwareversionen ist dafür nicht notwendig.

In FIG. 2 ist eine schematische Darstellung einer Prozesssequenz und einer zugehörigen Prozesszustandssequenz dargestellt. Eine Prozesssequenz 100 weist eine Vielzahl an einzelnen aktiven Prozessen P1, P2, P3, Pn auf, welche in der Darstellung sequentiell hintereinander ausgeführt werden. Eine parallele Ausführung aller oder eines Teils der aktiven Prozesse P1, ..., Pn ist ebenfalls möglich. Zwischen den einzelnen aktiven Prozessen P1, ..., Pn führt das Prozessorsystem 1 keinen Prozess aus. Dieses Nichtausführen wird als Leerlaufprozess L bezeichnet. In der Darstellung der FIG. 2 ist zwischen jedem aktiven Prozess P1, ..., Pn ein Leerlaufprozess L eingezeichnet. Dies ist nur beispielhaft. Ebenso können zwei aktive Prozesse P1, ..., Pn unmittelbar aufeinanderfolgen. Die Prozesszustandssequenz 101 gibt über die Zeitachse t aufgetragen den Prozesszustand F1, B1, F2, B2, B3, Bn an, welcher an der Schnittstelle 3 anliegt. So liegt z.B. der aktive Prozesszustand B1 zwischen dem Zeitpunkt t1 und dem Zeitpunkt t2 für die Zeitspanne z1 an, da in diesem Zeitbereich der aktive Prozess P durch das Prozessorsystem 1 ausgeführt wird. Ebenso liegen die aktiven Prozesszustände P2, P3 und Pn an der Schnittstelle 3 an, während die aktiven Prozesse P2, P3 und Pn ausgeführt werden. Während der Ausführung der Leerlaufprozesse L liegt ein inaktiver Prozesszustand F1, F2, F3 an der Schnittstelle 3 an. Die Protokolleinrichtung 2 speichert die zu den aktiven Prozesszuständen B1, ..., Bn zugehörigen ersten Zeitspannen z1, z2, z3, zn auf. Um die Systemlast während eines geeignet gewählten Beobachtungszeitraumes b zu bestimmen, werden die ersten Zeitspannen z1, z2, und z3 in Bezug zu der Dauer des Beobachtungszeitraumes b gesetzt. Dies erfolgt in üblicher Weise durch Aufsummieren der Zeitspannen z1, z2, z3, welche innerhalb des Beobachtungszeitraumes b erfasst wurden. Dazu können diese ersten Zeitspannen z1, ..., z3 aufsummiert werden und durch die Dauer des Beobachtungszeitraumes geteilt werden. An einen ersten Beobachtungszeitraum b kann sich unmittelbar ein zweiter Beobachtungszeitraum b anschließen. Der Beginn und das Ende eines Beobachtungszeitraumes können mit dem Beginn und/oder Ende des Ausführens eines aktiven Prozesses zusammenfallen, wie in FIG. 2 dargestellt. Jedoch ist es ebenfalls möglich, dass der Beobachtungszeitraum b beginnt oder endet, während ein aktiver Prozess und/oder ein Leerlaufprozess ausgeführt werden. Bei einer Bestimmung der Systemlast sind entsprechend die ersten Zeitspannen z1, ..., zn, welche nicht vollständig innerhalb des Beobachtungszeitraums b liegen, nur anteilig in der Summe zu berücksichtigen.

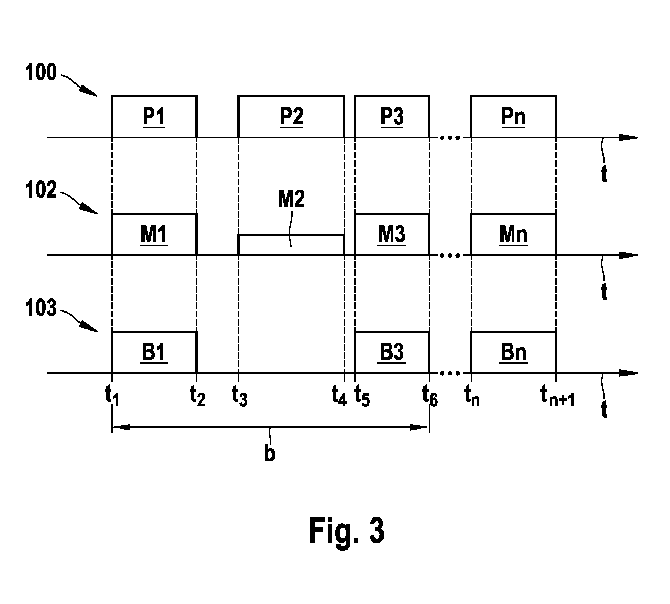

In FIG. 3 ist schematisch eine Prozesssequenz 100, eine Maskensequenz 102 und eine Prozesszustandssequenz 103 gemäß einer weiteren Ausführungsform der vorliegenden Erfindung dargestellt. In dem vorhergehenden Ausführungsbeispiel zu FIG. 2 trägt jeder aktive Prozess P1, ..., Pn zu dem bestimmten Wert der Systemlast bei. Um den Beitrag eines einzelnen oder eines Teils der aktiven Prozesse P1, ..., Pn zur Systemlast des Prozessorsystems 1 zu bestimmen, wird nicht zu jedem ausgeführten aktiven Prozess P1, ..., Pn ein aktiver Prozesszustand B1, ..., Bn an der Schnittstelle 3 ausgegeben. In der Darstellung der FIG. 3 wird beim Ausführen des aktiven Prozesses P2 kein aktiver Prozesszustand an der Schnittstelle 3 generiert. Beim Bestimmen der Systemlast innerhalb des Beobachtungszeitraumes b wird somit nur der Beitrag der aktiven Prozesse P1 und P3 erfasst.

Eine weitere Möglichkeit, den Beitrag eines einzelnen aktiven Prozesses P1, ..., Pn zu der Systemlast des Prozessorsystems 1 zu bestimmen, ist, in der Protokolleinrichtung 2 eine Maskierung zu implementieren, welche zugehörig zu jedem aktiven Prozess P1, ..., Pn einen Maskenwert M1, ..., Mn vorhält. Diese Maskenwerte M1, ..., Mn werden den entsprechenden Zeitspannen z1, ..., zn der aktiven Prozesse P1, ..., Pn durch die Protokolleinrichtung 2 zugeordnet. Beim Bestimmen der Systemlasten des Prozessorsystems 1 werden nur die ersten Zeitspannen z1, ..., zn berücksichtigt, deren zugeordneter Maskenwert M1, ..., Mn gesetzt ist. In den dargestellten Beispielen in FIG. 3 ist der Maskenwert M1, M3 und Mn gesetzt, und der Maskenwert M2 nicht gesetzt. Dementsprechend werden beim Bestimmen der Systemlast in dem Beobachtungszeitraum b nur die Zeitspannen z1, ..., zn des aktiven Prozesses P1 und des aktiven Prozesses P3 berücksichtigt.

Eine Zuordnung der Maskenwerte M1, ..., Mn zu den Zeitspannen z1, ..., zn kann erfolgen indem jeder Prozesszustand B1, ..., Bn eine Kennung aufweist, die diesem Prozesszustand B1, ..., Bn eindeutig den zugehörigen aktiven Prozess P1, ..., Pn zuordnet. Durch Aufzeichnung dieser Kennung zusammen mit der Zeitspanne z1, ..., zn durch die Protokolleinrichtung 2 ist eine eindeutige Zuordnung der Maskenwerte M1, ..., Mn zu den Zeitspannen z1, ..., zn möglich.

Obwohl die vorliegende Erfindung anhand eines bevorzugten Ausführungsbeispiels vorstehend beschrieben wurde, ist sie darauf nicht beschränkt, sondern auf vielfältige Weise modifizierbar.

Ein aktiver Prozesszustand P1, ..., Pn muss nicht zwingenderweise permanent an der Schnittstelle 3 anliegen. Ebenfalls ist denkbar, dass ein Signal den Beginn des aktiven Prozesszustandes B1 anzeigt und ein zweites Signal das Ende eines aktiven Prozesszustandes B1, ..., Bn signalisiert.

### BEZUGSZEICHENLISTE

| | |
|---|---|
| 1 | Prozessorsystem |
| 2 | Protokolleinrichtung |
| 3 | Schnittstelle |
| 4 | Schnittstelle |
| 5 | Ausgabeschnittstelle |
| 6 | Ausgabeeinrichtung |
| 10, 11 | Kommunikationseinrichtung |
| z1, z2, z3, zn | erste Zeitspanne |
| t1-t6, tn, tn+1 | Zeitpunkte |
| 100 | Prozesssequenz |
| 101 | Sequenz von Prozesszuständen |
| 102 | Maskensequenz |
| 103 | Sequenz ausgewählter aktiver Prozesszustände |
| F1, F2, F3 | inaktiver Prozesszustand |
| B1, B2, B3, Bn | aktiver Prozesszustand |
| P1, P2, P3, Pn | aktive Prozesse |
| L | Leerlaufprozess |
| M1, M2, M3, Mn | Maske |
| b | Beobachtungszeitraum |

## Patentansprüche

1. Verfahren zum Bestimmen einer Systemlast eines Prozessorsystems (1), auf welchem einer oder mehrere aktive Prozesse (P1, P2, P3, Pn) ausgeführt werden, mit den Schritten:
Ausgeben eines Prozesszustandes (B1, B2, B3, Bn, F1, F2, F3) durch das Prozessorsystem (1) an eine Schnittstelle (3), wobei ein aktiver Prozesszustand (B1, B2, B3, Bn) angibt, dass ein aktiver Prozess (P1, P2, P3, Pn) ausgeführt wird;
Übermitteln des Prozesszustandes (B1, ... , F3) an eine Schnittstelle (4) einer Protokolleinrichtung (2);
Aufzeichnen von ersten Zeitspannen (z1, z2, z3, zn) durch die Protokolleinrichtung (2), wobei eine erste Zeitspanne (z1, z2, z3, zn) einer Zeitspanne entspricht, für welche ein aktiver Prozesszustand (B1, B2, B3, Bn) vorliegt; und
Bestimmen der Systemlast durch die Protokolleinrichtung (2) indem erste Zeitspannen (z1, z2, z3, zn), welche innerhalb eines Beobachtungszeitraumes (b) aufgezeichnet wurden, in Bezug zu der Dauer des Beobachtungszeitraums (b) gesetzt werden.

2. Verfahren nach Anspruch 1, wobei in einem Schritt aktive Prozesse (P1, P2, P3, Pn) ausgewählt werden und wobei nur für ausgewählte aktive Prozesse (P1, P2, Pn) ein aktiver Prozesszustand (B1, B2, Bn) an eine Schnittstelle (3) ausgeben wird.

3. Verfahren nach Anspruch 1 oder 2, wobei zum Bestimmen der Systemlast die ersten Zeitspannen (z1, z2, z3, zn) eines Beobachtungszeitraumes (b) aufsummiert werden.

4. Verfahren nach Anspruch 1 oder 2, wobei in einem Schritt aktive Prozesse (P1, P2, P3, Pn) ausgewählt werden und zum Bestimmen der Systemlast nur die ersten Zeitspannen (z1, z2, z3, zn) eines Beobachtungszeitraumes (b) aufsummiert werden, welche einem der ausgewählten Prozesse (P1, P3, Pn) zugehörig sind.

5. Verfahren nach einem der vorhergehenden Ansprüche, wobei ein Prozesszustand (B1, B2, B3, Bn, F1, F2, F3) durch eine binäre Informationseinheit kodiert wird.

6. Verfahren nach einem der Ansprüche 1-4, wobei der Prozesszustand (B1, B2, B3, Bn, F1, F2, F3) eine eindeutige Kennung des zugehörigen aktiven Prozesses (P1, P2, P3, Pn) aufweist und die eindeutige Kennung mit der ersten Zeitspanne (z1,..., zn) aufgezeichnet wird.

7. Verfahren nach einem der vorhergehenden Ansprüche, wobei für parallel ausgeführte aktive Prozesse (P1, P2, P3, Pn) jeweils eine eigene Schnittstelle (3) vorgesehen ist.

8. Vorrichtung zum Bestimmen einer Systemlast eines Prozessorsystems (1) mit:
einer Schnittstelle (4) zum Empfangen übermittelter Prozesszustände (B1, ..., F3) von dem Prozessorsystem (1), wobei ein aktiver Prozesszustand (B1, B2, B3, Bn) angibt, dass ein aktiver Prozess (P1, P2, P3, Pn) ausgeführt wird;
einer Protokolleinrichtung (2) zum Aufzeichnen von ersten Zeitspannen (z1, z2, z3, zn), wobei eine erste Zeitspanne (z1, z2, z3, zn) einer Zeitspanne entspricht, für welche ein aktiver Prozesszustand (B1, B2, B3, Bn) vorliegt und zum Bestimmen der Systemlast indem erste Zeitspannen (z1, z2, z3, zn), welche innerhalb eines Beobachtungszeitraumes (b) aufgezeichnet wurden, in Bezug zu der Dauer des Beobachtungszeitraums (b) gesetzt werden.

9. Vorrichtung nach Anspruch 9, wobei die Protokolleinrichtung (2) einen eigenen Zeitgeber aufweist.

10. Vorrichtung nach Anspruch 8 oder 9, mit einer Ausgabeeinrichtung (6) zur Darstellung der Systemlast in graphischer und/oder textbasierter Darstellung.

11. Vorrichtung nach einem der Ansprüche 8 bis 10, mit einer Kommunikationseinrichtung (10) zum Übermitteln des Prozesszustandes (B1, ..., F3) an die Protokolleinrichtung (2).
